# EUROPÄISCHE PATENTANMELDUNG

(11) **EP 4 502 361 A1**
(43) Veröffentlichungstag der Anmeldung: **05.02.2025**
(21) Anmeldenummer: 24191798.8
(22) Anmeldetag: 30.07.2024
(51) Int. Cl.: F03B 17/06, F03B 13/26

(54) **UNTERWASSER-STRÖMUNGSTURBINE**

(30) Priorität: 01.08.2023 DE 102023207338
(71) Anmelder: Aktiebolaget SKF, 415 50 Göteborg (SE)
(72) Erfinder: Memmel, Marcel Alfred, 97714 Ebenhausen (DE); Baumann, Michael, 97503 Gädheim (DE); Kuhstrebe, Jochen, 97318 Biebelried (DE)
(74) Vertreter: Kuhstrebe, Jochen

(57) **Zusammenfassung**

Offenbart wird eine Strömungsturbine (1), insbesondere Unterwasser Strömungsturbine, mit einer Gondel (2), in der ein Generator (3) zur Erzeugung von Strom aufgenommen ist, und einer mit der Gondel (2) verbundenen drehbaren Nabe (4), an der Rotorblätter (5) befestigbar sind, und die dazu ausgelegt ist, den Generator (3) anzutreiben, wobei in der Gondel (2) und/oder der Nabe (4) ein Ventilationssystem (50) mit mindestens einer Ventilationsvorrichtung (51) angeordnet ist.

## Beschreibung

### Technisches Gebiet

Vorliegende Erfindung betrifft eine Strömungsturbine, insbesondere eine Unterwasserströmungsturbine, gemäß dem Oberbegriff von Patentanspruch 1.

### Technischer Hintergrund

Eine Strömungsturbine umfasst, egal ob für Windkraft oder einen Unterwassereinsatz, üblicherweise eine Gondel, in der der eigentliche stromerzeugende Generator aufgenommen ist, und eine an der Gondel drehbar befestigte Nabe, an der die Rotorblätter befestigt sind und die mit Hilfe der Rotorblätter gedreht wird und den Generator antreibt. Sowohl die Nabe als auch die Gondel sind Hohlräume, die über Wartungsluken für ein Servicepersonal zugänglich sind und umfassen neben dem Generator mehrere andere für den Betrieb der Strömungsturbine notwendige Bauteile, die regelmäßig gewartet werden müssen.

Strömungsturbinen, insbesondere Unterwasserströmungsturbinen, wie beispielsweise Gezeitenturbinen, arbeiten dabei üblicherweise Unterwasser, so dass sämtliche mit Luft gefüllten Räume luftdicht abgeschlossen sind. Während des Betriebs der Turbine entstehen jedoch insbesondere in der Gondel und der Nabe giftige Gase, Feuchtigkeit, Öldunst und salzhaltige Luft, die die empfindlichen Komponenten wie Elektronik, Schleifringe oder ähnliche Teile negativ beeinflussen und ungeplante Ausfallzeiten verursachen können. Darüber hinaus muss das entstehende Luft-Gas-Gemisch für Wartungsarbeiten vor dem Zutritt von Wartungspersonal in die Gondel oder in die Nabe ausgetauscht werden, um nicht das Wartungspersonal hinsichtlich Gesundheit und der Sicherheit zu gefährden.

Dazu wird momentan üblicherweise die Wartungsluke geöffnet und eine lange Zeit gewartet bis sich die giftigen Dämpfe verflüchtigt haben. Manchmal wird dazu auch nach Öffnen der Wartungsluke ein Gebläse in die Gondel oder in die Nabe eingebracht, die die toxische Luft aus dem Innenraum von Gondel oder Nabe entfernt.

Zwar ermöglicht dies nach geraumer Zeit einen gefahrlosen Zutritt des Wartungspersonals, verhindert jedoch nicht die Beschädigung empfindlicher Komponenten.

Aufgabe vorliegender Erfindung ist es deshalb, eine Strömungsturbine, insbesondere eine Unterwasserturbine, vorzustellen, bei der auch im Betrieb die empfindlichen Komponenten vor giftigen Gasen geschützt sind. Gleichzeitig soll für Wartungszwecke ein Zugang problemlos und schnell möglich sein, um die Standzeiten der Turbine nicht unnötig zu verlängern.

### Zusammenfassung der Erfindung

Diese Aufgabe wird durch eine Strömungsturbine gemäß Patentanspruch 1 gelöst.

Im Folgenden wird eine Strömungsturbine, insbesondere eine Unterwasserströmungsturbine für ein Gezeitenkraftwerk, vorgestellt. Die Strömungsturbine umfasst eine Gondel, in der ein Generator zur Erzeugung von Strom aufgenommen ist, und eine mit der Gondel verbundenen drehbaren Nabe, an der Rotorblätter befestigbar sind, und die dazu ausgelegt ist, den Generator anzutreiben.

Um die empfindlichen Komponenten vor den schädlichen Einflüssen toxischer Gase, die im Betrieb entstehen können, zu schützen und jederzeit sicherzustellen, dass ein Wartungspersonal den Innenraum von Gondel und/oder Nabe betreten kann, wird weiterhin vorgeschlagen, in der Gondel und/oder in der Nabe, also im Innenraum von Gondel und/oder Nabe, ein Ventilationssystem mit mindestens einer Ventilationsvorrichtung anzuordnen.

Gemäß einem weiteren vorteilhaften Ausführungsbeispiel weist die mindestens eine Ventilationsvorrichtung mindestens eine Eintrittsöffnung auf, über die ein Medium, insbesondere Luft, das sich in der Gondel und/oder der Nabe befindet, in die Ventilationsvorrichtung eintritt. Bei dem Medium handelt es sich üblicherweise um Luft bzw. im Betrieb der Gondel auch um Luft, die giftige Gase, Feuchtigkeit, Öldunst oder einen Salzgehalt aufweisen kann. Im schlimmsten Fall kann die gesamte Zusammensetzung der Luft aus toxischen Gasen und Fremdbestandteilen bestehen. Weiterhin weist die Ventilationsvorrichtung eine Austrittsöffnung auf, durch die das in die Ventilationsvorrichtung eingetretene Medium aus der Ventilationsvorrichtung austreten kann. Im Innenraum der Ventilationsvorrichtung kann beispielsweise ein Luftfilter vorgesehen sein, der das Luft-Gas-Gemisch von schädlichen Bestandteilen reinigt. Alternativ können in dem Innenraum auch Sensoren vorgesehen sein, die einen Zustand der in die Ventilationsvorrichtung eingetretenen Luft bestimmen.

Weiterhin ist vorteilhaft, wenn die Ventilationsvorrichtung mindestens ein Saugelement, insbesondere einen Ventilator oder ein Gebläse aufweist, das dazu ausgelegt ist, das Medium, dass sich in der Gondel und/oder der Nabe befindet, durch die Ventilationsvorrichtung zu saugen oder zu blasen. Dadurch kann sichergestellt werden, dass das Medium, das in der Gondel oder in der Nabe vorhanden ist, aktiv in den Innenraum der Ventilationsvorrichtung geführt und aus der Austrittsöffnung ausgestoßen wird.

Bevorzugt dabei ist die Austrittsöffnung in der Nähe einer Wartungsluke angeordnet, so dass die verbrauchte Luft gezielt aus der Gondel bzw. der Nabe gesaugt werden kann, und durch frische Luft, die vorzugsweise eigenständig durch die Wartungsluke strömt, ersetzt wird.

So kann beispielsweise in dem Innenraum der Gondel bzw. Nabe lediglich ein Ventilator angebracht sein, der zielgerichtet Luft aus dem Innenraum der Gondel bzw. Nabe durch die Wartungsöffnung in Freie befördert. Auch hier wird ein Luftaustausch über nachströmende Frischluft erreicht.

Gemäß einem weiteren vorteilhaften Ausführungsbeispiel kann zwischen Ansaugstelle (Eintrittsöffnung) und Austrittsöffnung eine Rohrleitung verlegt sein, so dass Luft von Stellen, die besonders kontaminierungsträchtig sind, zu der Wartungsluke oder einem Luftreinigungselement geleitet werden kann. Dabei kann die Ventilationsvorrichtung auch mehrere Eintrittsöffnungen aufweisen, die über Rohrleitungen mit einem zentral fungierenden Ansaugelement verbunden sind, das wiederrum über eine zentrale Ausgangsleitung die Luft an eine bestimmte Austrittsöffnung abgibt.

Weiterhin kann vorgesehen sein, dass bei einer Wartung an der Rohrleitung, insbesondere an der Austrittsöffnung, eine Sensoreinrichtung angeschlossen werden kann, die den Zustand der Luft überprüft. Des Weiteren ist möglich an der Austrittsöffnung weitere Rohrleitungselemente zu befestigen, um gezielt Luft nicht nur in den Bereich der Wartungsklappe zu überführen, sondern gezielt an anderen Stellen, weit entfernt von der Wartungsluke, freizusetzen. Dies ist insbesondere bei gesundheitsschädlichen Luftbestandteilen von Vorteil.

Um nicht die Umwelt unzulässig zu belasten, kann bei Wartungsprozessen selbstverständlich auch eine Luftreinigungsvorrichtung an der Rohrleitung bzw. der Austrittsöffnung angeschlossen werden, oder die Luft aus der Austrittsöffnung in Richtung eines Luftreinigungssystems mittels entsprechender Rohrleitung geführt werden.

Zum Anschließen der diversen Bauteile können an der Austrittsöffnung entsprechende Anschlusselemente vorgesehen sein.

Um auch bei geschlossener Wartungsluke und während des laufenden Betriebs für ein nicht-toxisches Raumklima zu sorgen, so dass empfindliche Bauteile, wie beispielsweise Schleifringe, nicht beschädigt werden, beispielsweise oxidieren, wird weiterhin vorgeschlagen, dass das Ventilationssystem einen Luftfilter umfasst. Wie oben erwähnt kann eine derartige Luftfilterung in dem Innenraum der Ventilationsvorrichtung angeordnet sind. Es ist jedoch auch möglich, dass ein passiv betriebener Luftfilter in dem Innenraum der Gondel und/oder Nabe vorhanden ist, so dass auf ein separates Saug- oder Gebläseelement verzichtet werden kann.

Um jedoch die Effizienz der Luftreinigung zu erhöhen, ist auch in diesem Fall eine Kombination aus Luftreinigung und aktivem Lufttransport bevorzugt, so dass die in der Gondel bzw. Nabe vorhandene Luft auch während des Betriebs von Schadstoffen, wie beispielsweise Ölnebel, oder einem hohen Salzgehalt, gereinigt wird. Dies erhöht die Lebensdauer der empfindlichen Komponenten und ermöglicht größere Wartungsintervalle, die insbesondere bei Unterwassereinsätzen zu nicht unerheblichen Problemen und Ausfallzeiten führen würden.

Dabei kann die Filtereinrichtung ein chemisch und/oder mechanisch arbeitender Luftfilter sein, wie beispielsweise ein Partikelfilter.

Gemäß einem weiteren vorteilhaften Ausführungsbeispiel weist das Ventilationssystem weiterhin mindestens eine Sensorvorrichtung auf. Die Sensorvorrichtung kann dabei, wie oben schon erwähnt, in der Ventilationsvorrichtung direkt integriert sein, es ist jedoch auch möglich die Sensorvorrichtung an strategisch wichtigen Positionen innerhalb der Gondel bzw. der Nabe zu positionieren. Dadurch können insbesondere an hochgradig kontaminierungsträchtigen Orten Messungen durchgeführt werden, die Auskunft über einen Zustand des in der Gondel bzw. der Nabe vorhandenen Mediums, insbesondere der Luft, geben können.

Dabei ist die Sensorvorrichtung vorzugsweise dazu ausgelegt mindestens einen Zustand oder eine Zustandsgröße des in der Gondel und/oder der Nabe vorhandenen Mediums zu bestimmen. Insbesondere ist die Sensorvorrichtung dazu ausgelegt, einen oder mehrere Bestandteile eines in der Gondel und/oder der Nabe vorhandenen Mediums zu detektieren oder insgesamt eine Zusammensetzung des Mediums zu analysieren. Weiterhin kann die Sensorvorrichtung mit einer Sende- und Empfangseinheit ausgestattet sein, mit der die Informationen über den Zustand des in der Nabe bzw. Gondel befindlichen Mediums ausgegeben werden können. Dabei kann als Empfänger dieser Information eine externe Wartungsperson oder aber auch eine Steuervorrichtung für die Ventilationsvorrichtung dienen. In Abhängigkeit des von der Sensorvorrichtung detektierten Zustands des Mediums, kann dann die Wartungsperson, oder die Steuervorrichtung, entscheiden, ob eine Luftreinigung nötig ist und/oder ausreichend durchgeführt wurde.

Dabei ist insbesondere weiterhin vorteilhaft, wenn das Ventilationssystem ebenfalls eine Steuereinheit, wie beispielsweise ein Steuergerät, und/oder eine Sende-/Empfangseinheit aufweist, wobei die Sende-Empfangseinheit dazu ausgelegt ist, ein Signal zu senden und/oder zu empfangen und die Steuereinheit dazu ausgelegt ist, basierend auf dem empfangenen Signal die Ventilationsvorrichtung zu aktivieren und zu deaktivieren. Dabei kann das empfangene Signal direkt von der Sensorvorrichtung ausgegeben sein, es ist jedoch auch möglich, dass das empfangene Signal von einer externen Bedienperson an die Steuereinrichtung gesendet wird. Ebenfalls ist möglich, dass die Sensoreinrichtung ein Signal an eine externe Wartungsperson sendet und die Wartungsperson dann daraufhin die Ventilationsvorrichtung aktiviert. Des Weiteren ist ebenfalls möglich, dass von außerhalb ein Signal an die Sensoreinheit gesendet wird, die das Messen bzw. Analysieren des Mediums aktiviert. So ist beispielsweise ebenfalls möglich, dass bei einem Wartungsfall erst die Ventilationsvorrichtung aktiviert wird und erst nach einer gewissen Ablauffrist die Sensoreinrichtung aktiviert wird, um zu detektieren, ob ein Zutritt für eine Wartungsperson gefahrlos möglich ist.

Weiterhin ist vorteilhaft, wenn die Sensoreinrichtung dazu ausgelegt ist, erst dann ein Signal an die Steuereinrichtung oder eine externe Bedienperson auszugeben, wenn die Analyse des Zustands der Luft/des Mediums ergibt, dass eine Reinigung oder Lüftung notwendig ist. Selbstverständlich kann eine derartige Analyse auch von anderen Steuerelementen vorgenommen werden und nur lediglich die Rohdaten über den Zustand der Luft über das Signal gesendet werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine schematische Darstellung einer Unterwasserturbine
Fig. 2: eine schematische Darstellung eines ersten Ausführungsbeispiel eines Ventilationssystems für eine Unterwasserturbine in
   a. einer Gondel
   b. einer Nabe
Fig. 3: eine schematische Darstellung eines zweiten Ausführungsbeispiel eines Ventilationssystems für eine Unterwasserturbine in
   a. einer Gondel
   b. einer Nabe
Fig. 4: eine schematische Darstellung eines dritten Ausführungsbeispiel eines Ventilationssystems für eine Unterwasserturbine in
   a. einer Gondel
   b. einer Nabe

### Detaillierte Beschreibung der Erfindung

Im Folgenden werden gleiche oder funktionell gleichwirkende Elemente mit denselben Bezugszeichen gekennzeichnet.

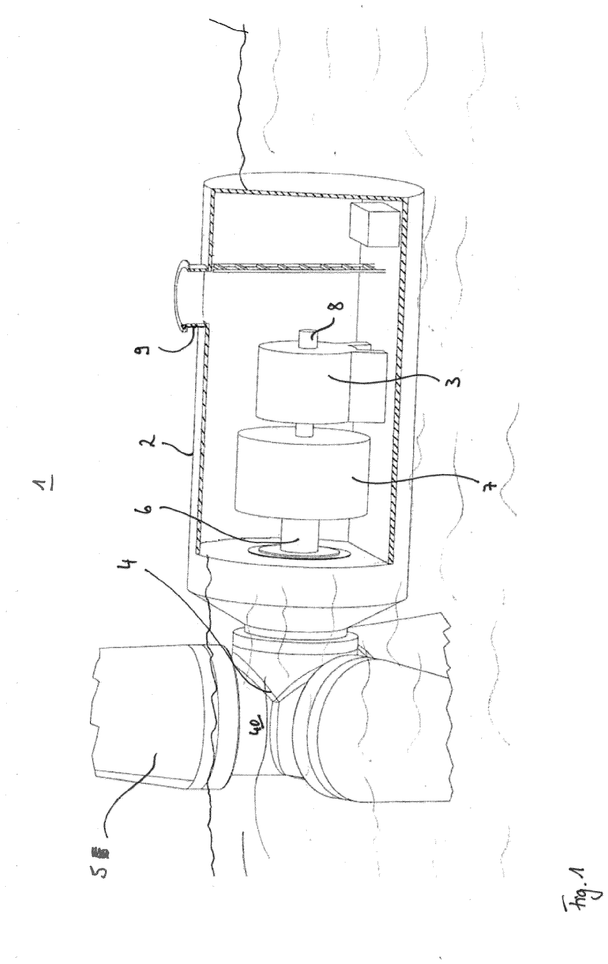

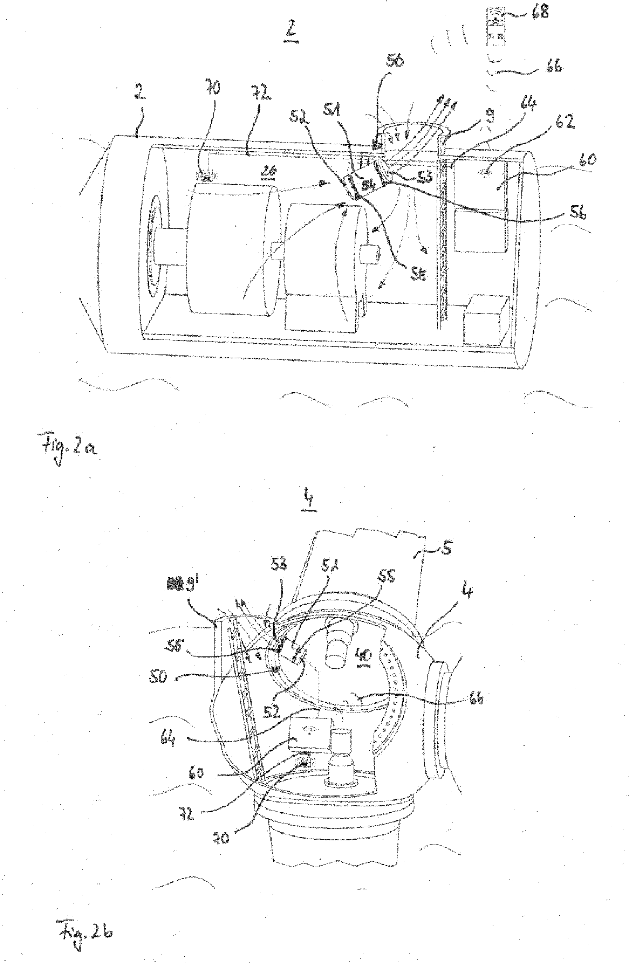

Figur 1 zweigt schematische eine Unterwasserturbine in teilweiser Schnittansicht und die Figuren 2 bis 4 zeigen verschiedene Ausführungsbeispiele für verschiedene Ventilationssysteme in einer Gondel (Teilfigur a) bzw. einer Nabe (Teilfigur b). Dabei zeigen die Figuren 2a, 3a, 4a das jeweilige Ausführungsbeispiel für die Gondel, während die Ausführungsbeispiele 2b, 3b, 4b das jeweilige Ausführungsbeispiel für die Nabe darstellen.

Wie Figur 1 zu entnehmen umfassen Strömungsturbinen 1, bzw. Unterwasserturbinen, insbesondere für Gezeitenkraftwerke, üblicherweise eine Gondel 2, in deren Innenraum 20 ein Generator 3 zur Erzeugung von Strom aufgenommen ist, sowie eine drehbar an der Gondel 2 befestigte Nabe 4, die wiederum Rotorblätter 5 trägt. Die Nabe 4 selbst ist ebenfalls hohl ausgebildet und weist einen Innenraum 40 auf. Die Rotorblätter 5 werden durch die Strömung angetrieben, so dass die Nabe 4 in Rotation versetzt wird. Die von den Rotorblättern 5 erzeugte Rotation der Nabe 4 wird über eine Welle 6 in die Gondel 2 eingespeist, von dort in einem Getriebe 7 übersetzt und über eine Welle 8 in den Generator 3 übertragen. Dabei dient das Getriebe 7 dazu, die langsame Rotation der Rotorblätter 5 in eine schnelle Rotation der Generatorwelle 8 umzuwandeln, die geeignet ist, ausreichend Strom in dem Generator 3 zu erzeugen. Weiterhin sind in der Turbine 1 unter anderem verschiedenste Lager und Bremssysteme (nicht dargestellt), die die Drehung der Wellen 6, 8 bis zu einem Stillpunkt reduzieren können, sowie weiter nicht dargestellte Bauteile angeordnet. Auch die Rotorblätter 5 sind mittels Lager drehbar gelagert ausgebildet und können dadurch der Strömungsrichtung angepasst werden, bzw. so gedreht werden, dass die Strömung keine Rotation verursacht.

Die Lager selbst und auch der Generator 3 und das Getriebe 7 werden dabei üblicherweise mit Öl geschmiert. Um den Betrieb der Turbine, insbesondere die Drehung der Wellen 6, 8, des Getriebes 7 und des Generators 3, aber auch die Einstellung der Rotorblätter 5, zu überwachen, sind weiterhin auch elektronische Bauteile (nicht dargestellt) vorgesehen, die relativ empfindlich sind.

Um all diese Bauteile zu überwachen bzw. zu warten sind weiterhin an der Gondel 2 und an der Nabe 4 Wartungsluken 9, 9' vorgesehen, die einen Zugang zu dem Innenraum 20 der Gondel bzw. dem Innenraum 40 der Nabe 4 ermöglichen. Die Innenräume 20, bzw. 40 sind dabei hermetisch abgedichtet, um ein Eindringen von Wasser im Unterwasserbetrieb zu verhindern.

Während des Betriebs der Turbine 1 sammeln sich aufgrund der zu Außenumgebung abgeschlossenen Innenräume 20; 40 in der Gondel 2 und in der Nabe 4 giftige Gase, Feuchtigkeit, Öldunst und salzhaltige Luft, die die empfindlichen Komponenten wie Elektronik, Schleifringe oder ähnlich Teile negativ beeinflussen. Dies kann zu ungeplanten Ausfallzeiten führen und dazu führen, dass die Wartungsintervalle verkürzt werden müssen. Die im Betrieb entstehende Luftzusammensetzung in den Innenräumen 20; 40 führt aber auch dazu, dass eine Wartungsperson nicht jederzeit den Innenraum 20; 40 von Gondel 2 oder Nabe 4 betreten kann, sondern erst sicherstellen muss, dass die Luftzusammensetzung für ein gefahrloses Betreten geeignet ist, und im Falle, dass diese nicht geeignet ist, für eine Belüftung und Endlüftung der Gondel 2 bzw. der Nabe 4 sorgen muss, was wiederum eine lange Zeit in Anspruch nimmt.

Um aktiv einen Luftaustausch zu ermöglichen und sicherzustellen, dass der Innenraum 20; 40 für eine Person gefahrlos betretbar ist, wird im Rahmen dieser Anmeldung vorgeschlagen in den Innenräumen 20; 40 ein Ventilationssystem 50 zu installieren. Dazu kann wie dem Ausführungsbeispiel der Figur 1 zu entnehmen in dem Innenraum 20 bzw. 40 von Gondel 2 bzw. Nabe 4 eine Ventilationsvorrichtung 51 vorgesehen sein, die dazu ausgelegt ist, Luft aus dem Innenraum 20 bzw. 40 durch die Wartungsluke 9 bzw. 9' nach draußen zu befördern. Die Ventilationsvorrichtung 51 ist in dem dargestellten Ausführungsbeispiel rohrförmig ausgebildet und weist eine Eintrittsöffnung 52 und eine Austrittsöffnung 53 auf, sowie einen Innenraum 54, in dem ein erster Ventilator 55 und ein zweiter Ventilator 56 angeordnet sind. Die Ventilatoren 55, 56 sorgen dafür, dass Luft aus dem Gondelinnenraum 20 (siehe Pfeile) in die Ventilationsvorrichtung 51 gesaugt wird und über die Austrittsöffnung 53 und durch die Wartungsluke 9 ins Freie abgegeben wird (siehe Pfeile). Durch den dadurch entstehenden Unterdruck in dem Innenraum 20 der Gondel 2 strömt dann Frischluft von draußen in den Innenraum 20 (siehe Pfeile). Wie weiterhin Figur 1 zu entnehmen, ist dazu die Eintrittsöffnung 52 dem Innenraum 20 zugewandt, während die Austrittsöffnung 53 derart ausgerichtet ist, dass die Luft aus dem Innenraum 20 durch die Wartungsluke 9, 9' in die Umgebung strömen kann.

Um die Ventilationsvorrichtung 51 zu aktivieren, weist das Ventilationssystem 50 weiterhin ein Steuergerät 60 mit einer Steuereinheit und einer Sende- und Empfangseinheit 62 auf, über die es beispielsweise ein Signal 66 empfangen kann, das von einem externen Bedienelement 68 ausgegeben wird. In dem dargestellten Ausführungsbeispiel ist das Steuergerät 60 weiterhin über eine Leitung 64 mit der Ventilationsvorrichtung 50 verbunden, um bei Erhalt des Signals 66 ein entsprechendes Aktivierungssignal an die Ventilationsvorrichtung 51 zu senden und diese zu aktivieren. Um sicherzustellen, dass die in dem Innenraum 20 vorhandene Luft für eine Begehung einer Bedienperson geeignet ist, ist weiterhin eine Sensorvorrichtung 70 vorgesehen, die dazu ausgelegt ist, einen Zustand oder eine Zustandsgröße des in dem Innenraum 20 vorhandenen Mediums, nämlich der Luft, zu bestimmen oder insgesamt die Zusammensetzung zu analysieren. Die Analysewerte können wiederum über eine Leitung 72 an das Steuergerät 60 übergeben werden, es ist jedoch auch eine kabellose Übertragung möglich. Die Sensorvorrichtung 70 weist vorzugsweise ebenfalls eine Sende- und Empfangseinheit (nicht dargestellt) auf. Weiterhin kann die Sensorvorrichtung 70 eine Steuereinheit umfassen.

Mit Hilfe der Werte der Sensorvorrichtung kann, in der Sensorvorrichtung 70, dem Steuergerät 60 oder einer externen Auswerteeinheit, feststellen werden, ob Grenzwerte, die vorzugsweise vorab bestimmt werden, für bestimmte Bestandteile der Luft über- oder unterschritten werden. Abhängig davon kann die Sensorvorrichtung 70 entsprechende Signale versenden. Alternativ ist selbstverständlich auch möglich, dass eine derartige Auswertung der Sensorsignale in dem Steuergerät 60 oder extern von einer Bedienperson (nicht dargestellt) vorgenommen werden, die entsprechend dann über die externe Schnittstelle 68 die Ventilationsvorrichtung 51 mit Hilfe des Steuergeräts 60 aktiviert oder deaktiviert. Stellt die Sensoreinheit 70 oder das Steuergerät 60 oder die Bedienperson fest, dass ein Zutritt gefahrlos möglich ist, kann mit Hilfe des Bedienpanels 68 und der Steuereinheit 60 die Ventilvorrichtung 51 auch deaktiviert werden.

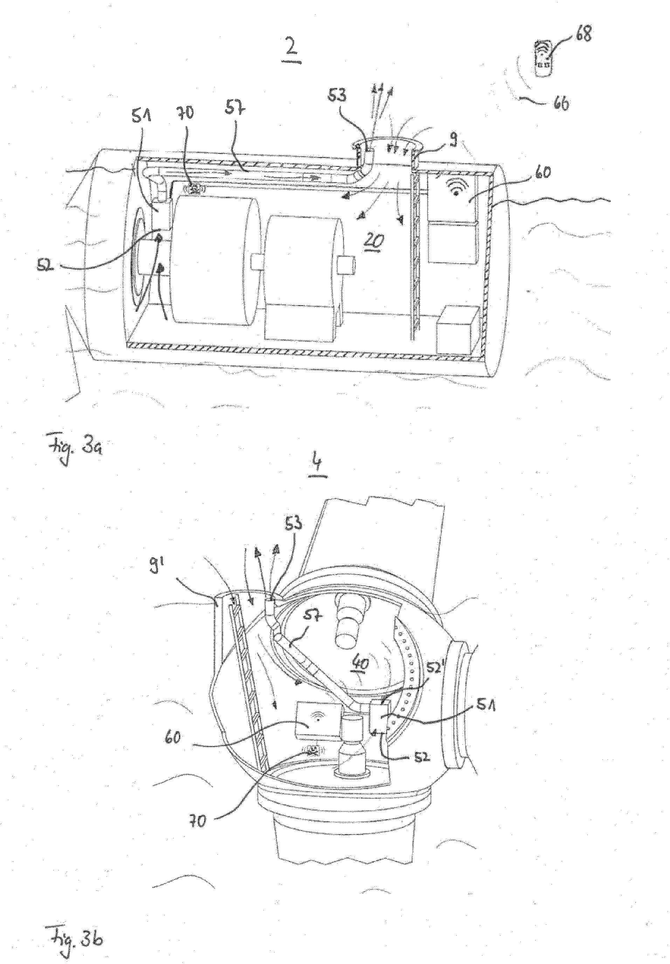

Um eine noch gezieltere Absaugung der Luft zu erreichen und auch Luft an stark kontaminierten Stellen direkt zu entsorgen, kann weiterhin vorgesehen sein, und wie in Figuren 3a, 3b dargestellt, dass eine oder mehrere Rohrleitungen 57 vorgesehen sind, die Luft gezielt aus dem Innenraum 20; 40 entfernen. Dabei kann beispielsweise die Ventilationsvorrichtung 51 an einer weit von der Wartungsluke 9, 9' entfernten Stelle angeordnet sein und dort Luft in die Ventilationseintrittsöffnung 52 einsaugen. Die eingesaugte Luft wird dann über die Rohrleitung 57 in Richtung der Wartungsluke 9, 9' transportiert und dort gezielt in Freie abgeblasen. Die Rohrleitung 57 hat den weiteren Vorteil, dass es zu geringerer Rekontamination durch Vermischung zwischen ausströmender und einströmender Luft führen kann. Weiterhin ist es möglich am Ende der Rohrleitung 57 weitere Geräte anzuschließen, wie beispielsweise eine weitere Rohrleitung, um die verbrauchte Luft noch weiter abzuführen oder ein oder mehrere Luftreinigungsgeräte, um sicherzustellen, dass die verbrauchte Luft nicht die Umgebung kontaminiert. Selbstverständlich ist es auch möglich, dass an der Eintrittsöffnung 52 eine oder mehrere Rohrleitungen (nicht dargestellt) angeordnet sind, die gezielt in dem Innenraum 20; 40 verlegt werden, um besonders stark kontaminierte Stellen zu entlüften. Auch in diesem Ausführungsbeispiel ist eine Sensorvorrichtung 70 und ein Steuergerät 60 vorgesehen, die für ein Aktivierung und Deaktivierung, sowie eine Überprüfung des Zustands der Luft sorgen.

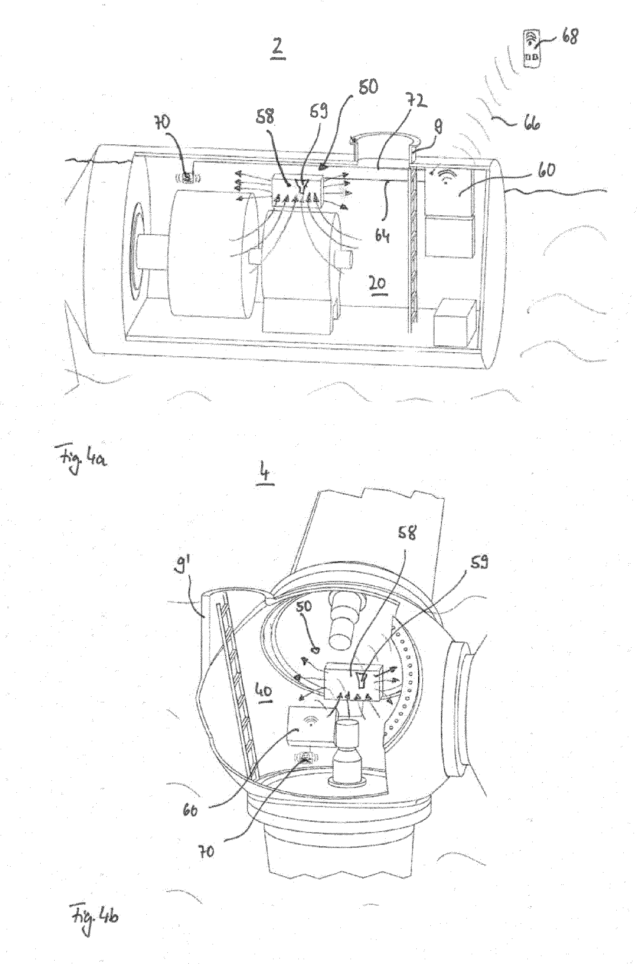

Die Figuren 4a, 4b zeigen wiederum ein Ausführungsbeispiel für ein Belüftungssystem in Gondel 2 und Nabe 4, bei dem jedoch kein Luftaustausch mit der Außenumgebung erfolgt, sondern das Ventilationssystem 50 mit einer Luftreinigungsvorrichtung 58, die einen oder mehrere Filtervorrichtungen 59 umfasst, ausgestattet ist, die dafür sorgt, das kontaminierte Luft eingesaugt und gereinigte Luft ausgestoßen wird. Dies ist insbesondere bei einem Unterwassereinsatz vorteilhaft, bei dem eine Frischluftzufuhr nicht möglich ist. Die Luftfiltereinheit 59 sorgt dabei mit Hilfe von chemischen und/oder mechanischen Filtern dafür, dass Schadstoffe, giftige Gase und Partikel aus der Luft gefiltert werden und gereinigte Luft in den Innenraum 20; 40 abgegeben wird. Auch in diesem Fall ist ein Sensor 70 und ein Steuergerät 60 von Vorteil, die überprüfen, ob und wie weit die Luft gereinigt werden muss oder ob die Reinigung erfolgreich ist. Dazu kann beispielsweise wiederum das Sensorgerät und die Steuereinrichtung 70 miteinander kommunizieren, um entsprechend bedarfsgesteuert die Luftreinigungsvorrichtung 58 zu betätigen. Selbstverständlich ist ebenfalls möglich, dass die Luftreinigungsvorrichtung 58 über eine externe Bedienung aktiviert bzw. deaktiviert wird und/oder Sensordaten ausgelesen werden können.

Selbstverständlich ist ebenfalls möglich, die Luftreinigungsvorrichtung 58 mit der Ventilationsvorrichtung 51 zu kombinieren und im geschlossenen Betrieb lediglich für eine Umwälzung der Luft und Reinigung der Luft zu sorgen, während kurz vor einem Betreten für eine Wartung zusätzlich der Innenraum mit Frischluft belüftet wird.

Insgesamt können die für die Gondel und Nabe vorgeschlagenen Ventilationssysteme entweder für den Dauerbetrieb oder für den Wartungsmodus konzipiert sein. Vorzugsweise basieren die Lüftungskonzepte entweder auf einer Luftreinigung, einer Lüftung mit Rohrleitungen und/oder einer Saug-/Gebläselüftung. Vorzugsweise sind alle Ventilationssysteme mit einer Sensoreinheit, einem Steuergerät und einer drahtlosen Steuerung für den Fernzugriff, Kontrolle und Zustandsüberwachung ausgestattet und ermöglichen, dass das zusätzlich eingebrachte Ventilationssysteme in der Gondel und Nabe während der Wartung überflüssig sind, und auch eine aktive Luftgehaltsmessung während der Wartung nicht mehr nötig ist. Weiterhin kann mit Hilfe der Sensoreinrichtung ein sicherer Zugang des Wartungspersonals gewährleistet werden. Ebenfalls mit Hilfe der Sensoreinrichtung kann auch eine Zustandsüberwachung während des Betriebs erfolgen und falls nötig eine Aktivierung der Luftfiltereinheit, um für einen möglichst kontaminierungsfreien Betrieb, und damit schadstoffarmen Betrieb, zu sorgen.

### Bezugszeichenliste

- 1: Strömungsturbine
- 2: Gondel
- 3: Generator
- 4: Nabe
- 5: Rotorblätter
- 6, 8: Welle
- 7: Getriebe
- 9, 9`: Wartungsluken
- 20,40: Innenraum
- 50: Ventilationssystem
- 51: Ventilationsvorrichtung
- 52: Eintrittsöffnung
- 53: Austrittsöffnung
- 54: Innenraum
- 55, 56: Ventilatoren
- 57: Rohrleitungen
- 58: Luftreinigungsvorrichtung
- 59: Filtervorrichtungen, Luftfiltereinheit
- 60: Steuergerät
- 62: Sende- und Empfangseinheit
- 64: Leitung
- 66: Signal
- 68: externes Bedienelement
- 70: Sensorvorrichtung
- 72: Leitung

## Patentansprüche

1. Strömungsturbine (1), insbesondere Unterwasser Strömungsturbine, mit einer Gondel (2), in der ein Generator (3) zur Erzeugung von Strom aufgenommen ist, und einer mit der Gondel (2) verbundenen drehbaren Nabe (4), an der Rotorblätter (5) befestigbar sind, und die dazu ausgelegt ist, den Generator (3) anzutreiben, **dadurch gekennzeichnet, dass** in der Gondel (2) und/oder der Nabe (4) ein Ventilationssystem (50) mit mindestens einer Ventilationsvorrichtung (51) angeordnet ist.

2. Strömungsturbine (1) nach Anspruch 1, wobei die mindestens eine Ventilationsvorrichtung (51) mindestens eine Eintrittsöffnung (52) aufweist, über die ein Medium, das sich in der Gondel (2) und/oder der Nabe (4) befindet, in die Ventilationsvorrichtung (51) eintritt, und mindestens eine Austrittsöffnung (53) aufweist, durch die das in die Ventilationsvorrichtung (51) eingetretene Medium aus der Ventilationsvorrichtung (51) austritt.

3. Strömungsturbine (1) nach Anspruch 1 oder 2, wobei zwischen Eintrittsöffnung (52) und Austrittsöffnung (53) eine Rohrleitung (57) angeordnet ist.

4. Strömungsturbine (1) nach einem der vorhergehenden Ansprüche, wobei die Ventilationsvorrichtung (51) mindestens ein Saugelement, insbesondere einen Ventilator (55, 56), aufweist, das dazu ausgelegt ist, ein Medium, das sich in der Gondel (2) und/oder der Nabe (4) befindet, durch die Ventilationsvorrichtung (51) zu saugen.

5. Strömungsturbine (1) nach einem der vorhergehenden Ansprüche, wobei das Ventilationssystem (50) eine Luftreinigungsvorrichtung (58) mit mindestens einer Filtereinrichtung (59) aufweist, die dazu ausgelegt ist, ein Medium, das sich in der Gondel (2) und/oder der Nabe (4) befindet, zu filtern, wobei vorzugsweise die Filtereinrichtung (59) ein chemisch und/oder mechanisch arbeitender Luftfilter, insbesondere ein Partikelfilter ist.

6. Strömungsturbine (1) nach einem der vorhergehenden Ansprüche, wobei die Ventilationsvorrichtung (51) in der Nähe einer Wartungsklappe (9, 9'), die in der Gondel (2) und/oder in der Nabe (4) vorgesehen ist, angeordnet ist, wobei insbesondere die Austrittsöffnung (53) in der Nähe der Wartungsklappe (9; 9') die in der Gondel (2) und/oder in der Nabe (4) vorgesehen ist, angeordnet ist.

7. Strömungsturbine (1) nach einem der vorhergehenden Ansprüche, wobei das Ventilationssystem (50) weiterhin mindestens eine Sensorvorrichtung (70) aufweist, wobei die Sensorvorrichtung (70) dazu ausgelegt ist, mindestens einen Zustand oder eine Zustandsgröße eines in der Gondel (2) und/oder der Nabe (4) vorhandenen Mediums zu bestimmen, insbesondere einen Bestandteil eines in der Gondel (2) und/oder der Nabe (4) vorhandenen Mediums zu detektieren und/oder eine Zusammensetzung eines in der Gondel (2) und/oder der Nabe (4) vorhandenen Mediums zu analysieren.

8. Strömungsturbine (1) nach Anspruch 7, wobei weiterhin die Sensorvorrichtung (70) eine Sende-/Empfangseinheit (62) aufweist, die dazu ausgelegt ist, ein Signal (66) zu senden und/oder zu empfangen, wobei vorzugsweise das gesendete Signal eine Information über den detektieren Zustand des in der Gondel (2) und/oder der Nabe (4) vorhandenen Mediums umfasst, und/oder das empfangene Signal dazu ausgelegt ist, die Sensorvorrichtung (70) zu aktivieren und/oder zu deaktivieren.

9. Strömungsturbine (1) nach Anspruch 7 oder 8, wobei das Ventilationssystem (50) weiterhin eine Steuereinheit (60) und eine Sende-/Empfangseinheit (62) aufweist, wobei die Sende-Empfangseinheit (62) dazu ausgelegt ist, ein Signal (66) zu senden und/oder zu empfangen, und die Steuereinheit (60) dazu ausgelegt ist, basierend auf dem empfangenen Signal die Ventilationsvorrichtung (51) zu aktivieren und/oder zu deaktivieren.

10. Strömungsturbine (1) nach Anspruch 8 oder 9, wobei das empfangene Signal (66) ein externes Signal, insbesondere ein externes Kommunikationssignal ist.

11. Strömungsturbine (1) nach Anspruch 9 oder 10, wobei die Steuervorrichtung (60) dazu ausgelegt ist, basierend auf dem detektierten Zustand des Mediums die Ventilationsvorrichtung (51) zu aktivieren und/oder zu deaktivieren.

12. Strömungsturbine (1) nach Anspruch 11, wobei die Steuereinheit (60) weiterhin dazu ausgelegt ist, die in dem Signal (66) der Sensorvorrichtung (70) enthaltenen Informationen über zumindest eine Zustandsgröße des Mediums auszuwerten, und die Ventilationsvorrichtung (51) zu aktivieren und/oder zu deaktivieren, wenn die Zustandsgröße einen vorgegebenen Wert überschreitet oder unterschreitet.
